(19) **Europäisches Patentamt**

**European Patent Office**

**Office européen des brevets**

(11) **EP 1 112 455 B1**

(12) **EUROPÄISCHE PATENTSCHRIFT**

(45) Veröffentlichungstag und Bekanntmachung des Hinweises auf die Patenterteilung:
**22.05.2002 Patentblatt 2002/21**

(21) Anmeldenummer: **99968699.1**

(22) Anmeldetag: **28.08.1999**

(51) Int Cl.⁷: **F16H 61/02**, F16H 59/52

(86) Internationale Anmeldenummer:
**PCT/EP99/06364**

(87) Internationale Veröffentlichungsnummer:
**WO 00/14436 (16.03.2000 Gazette 2000/11)**

(54) **VERFAHREN ZUR ERMITTLUNG EINER ANFAHR-GANGSTUFE**

METHOD FOR DETERMINING A STARTING GEAR STEP

PROCEDE POUR DETERMINER UN RAPPORT DE DEMARRAGE

(84) Benannte Vertragsstaaten:
**DE FR SE**

(30) Priorität: **02.09.1998 DE 19839837**

(43) Veröffentlichungstag der Anmeldung:
**04.07.2001 Patentblatt 2001/27**

(73) Patentinhaber: **ZF FRIEDRICHSHAFEN Aktiengesellschaft**
**88038 Friedrichshafen (DE)**

(72) Erfinder:
- **WOLF, Andreas**
  **D-86213 Ravensburg (DE)**
- **WINKEL, Matthias**
  **D-88250 Weingarten (DE)**
- **RÜCHARDT, Christoph**
  **D-88239 Wangen i. Allgäu (DE)**
- **WENGERT, Bertram**
  **D-88677 Markdorf (DE)**
- **MÜLLER, Jürgen**
  **D-88045 Friedrichshafen (DE)**

(56) Entgegenhaltungen:
EP-A- 0 120 189       EP-A- 0 268 686
DE-A- 3 334 718       US-A- 5 406 862

**Beschreibung**

Die Erfindung betrifft ein Verfahren zur Ermittlung einer Anfahr-Gangstufe für ein Fahrzeug mit einem Stufenwechselgetriebe mit mehreren Gangstufen.

Insbesondere bei schweren Nutzfahrzeugen mit vielgängigen Stufenwechselgetrieben sind verschiedene Gangstufen zum Anfahren geeignet, von denen beladungs- und fahrzustandsabhängig eine Gangstufe als Anfahr-Gangstufe gewählt wird.

Beispielsweise kann es bei einem unbeladenen Nutzfahrzeug mit einem 16-Gang-Getriebe auf ebener Strecke für ein optimales Fortkommen vorteilhaft sein, den fünften Gang als Anfahr-Gangstufe zu wählen, während es bei voll beladenem Fahrzeug in einer Steigungsstrecke erforderlich sein kann, im ersten oder zweiten Gang anzufahren. Wird in einer Fahrsituation eine zu kleine Anfahr-Gangstufe gewählt, hat dies unnötig viele Gangwechsel zur Folge. Wird die Anfahr-Gangstufe zu groß gewählt, dauert der Anfahr-Vorgang mit der Folge einer höheren Belastung der Anfahr-Kupplung länger oder muß gar wieder abgebrochen werden, wenn die zur Verfügung stehende Zugkraft im gewählten Anfahr-Gang nicht ausreichend ist.

Beim Anfahren wird die Drehzahldifferenz, welche bei stehendem Fahrzeug zwischen einem motorseitigen und einem getriebeseitigen Teil der Anfahr-Kupplung vorliegt, während einer Schlupf-Phase abgebaut. Während dieser Schlupf-Phase überträgt die Anfahr-Kupplung ein Moment, wodurch die Getriebeeingangswelle und das Fahrzeug beschleunigt wird. Während der Schlupf-Phase wird in der üblicherweise als Trockenkupplung ausgebildeten Anfahr-Kupplung eine erhebliche Reibarbeit erzeugt, wodurch hohe Temperaturen entstehen. Am Ende der Schlupfphase drehen die Teile der Anfahrkupplung synchron mit der Motordrehzahl. Wird beim Anfahren eine zu große Anfahr-Gangstufe gewählt, ist die erzielbare Beschleunigung der Getriebeeingangswelle nur klein, so daß die Schlupfphase sehr lange dauert und die entstehenden hohen Temperaturen die Anfahr-Kupplung schädigen. An Steigungsstecken kann der Fall auftreten, daß die Zugkraft kleiner als der Steigungswiderstand ist, wodurch das Fahrzeug rückwärts zu rollen beginnt.

Während bei Fahrzeugen mit herkömmlichen mechanischen Stufenwechselgetrieben der Fahrer die Anfahr-Gangstufe wählt, finden Verfahren zur Ermittlung einer Anfahr-Gangstufe vorzugsweise bei automatisierten Stufenwechselgetrieben Anwendung. Hierbei ist es möglich, die passende Anfahr-Gangstufe von einer elektronischen Steuerungseinrichtung ermitteln zu lassen und dem Fahrer beispielsweise über ein Display vorzuschlagen. Ein solches Display kann natürlich auch bei einem Fahrzeug mit einem herkömmlichen mechanischen Stufenwechselgetriebe für den Fahrer hilfreich sein. Natürlich ist es auch möglich, diesen berechneten Anfahr-Gang von einem automatisierten Stufengetriebe bzw. Lastschaltgetriebe beim Erreichen des Fahrzeugstillstands automatisch einlegen zu lassen.

Die US 5,406,862 offenbart ein Verfahren zur Ermittlung einer Anfahr-Gangstufe mit den Merkmalen des Oberbegriffs des Anspruchs 1 , bei welchem die Anfahr-Gangstufe von einer elektronischen Steuerungseinrichtung, abhängig von der Fahrzeugmasse und der Fahrbahnsteigung, ermittelt wird. In einem Kennfeldspeicher sind die geeigneten Anfahrgangstufen abhängig von der Fahrzeugmasse und der Fahrbahnsteigung, welche mit einem Neigungssensor ermittelt wird, abgelegt.

Ein bestimmter Getriebetyp wird üblicherweise in verschiedenen Fahrzeugtypen bzw. Varianten verwendet, die sich auch im Fahrzeuggewicht und beim Antriebsmotor voneinander unterscheiden können. Das Kennfeld, in welchem die Anfahr-Gangstufen abgelegt sind, ist variantenspezifisch, d. h. für unterschiedliche Fahrzeugvarianten mit unterschiedlichen Werten zu belegen.

Die Auswirkungen einer bestimmten Wertebelegung des Kennfelds auf die Kupplungsbelastung sind dabei nicht unmittelbar erkennbar, so daß die Auswirkungen einer bestimmten Einstellung für das ganze Kennfeld jeweils aufwendig nachgeprüft werden müssen. Fehleinstellungen können zur Zerstörung der Anfahr-Kupplung führen.

Ausgehend von diesem Stand der Technik ist die Aufgabe der Erfindung, ein Verfahren zur Ermittlung einer Anfahr-Gangstufe zu entwickeln, welches eine hohe Sicherheit gegenüber Fehleinstellungen aufweist, bei dem die Einstellungen leicht an verschiedene Varianten anpaßbar sind, und das unter Berücksichtigung der zulässigen Belastung der Anfahr-Kupplung immer die größtmögliche Anfahr-Gangstufe bereitstellt.

Die Erfindung wird durch ein die Merkmale des Hauptanspruchs aufweisendes Verfahren gelöst. Vorteilhafte Ausgestaltungen des Verfahrens sind in den Unteransprüchen aufgeführt.

Erfindungsgemäß wird die Anfahr-Gangstufe abhängig von einem zum Anfahren zur Verfügung stehenden Motormoment, einer maximalen Rutschzeit und/oder einer maximalen Reibarbeit der Anfahr-Kupplung während des Anfahr-Vorgangs ermittelt. Hierzu werden zunächst das zur Verfügung stehende Motormoment, ein maximal zulässiger Wert für eine Rutschzeit und/oder ein maximal zulässiger Wert für eine Reibarbeit der Anfahr-Kupplung während des Anfahr-Vorgangs ermittelt. Beginnend mit einer höchsten, zum Anfahren geeigneten Gangstufe werden dann in einer Berechnungsschleife, abhängig von der Übersetzung der Gangstufe, der Fahrzeugmasse, dem Fahrwiderstand und einem zum Anfahren verfügbaren Motormoment Werte für die Rutschzeit und/oder die Reibarbeit vorausberechnet. Die vorausberechneten Werte werden mit den zuvor ermittelten, maximal zulässigen Werten verglichen. Die Berechnungsschleife wird so lange mit der nächstkleineren, zum Anfahren geeigneten Gangstufe wiederholt, bis eine Gangstufe gefunden ist, bei welcher die vorausberechneten Werte kleiner oder gleich den maximal zulässigen Werten sind. Diese Gangstufe wird als Anfahr-Gangstufe ausgegeben. Der Fahrwiderstand wird während der Fahrt in kurzen Zeitabständen zyklisch berechnet, so daß nach Stillstand des Fahrzeugs jeweils ein aktueller Anfahrgang bereitgestellt werden kann.

Die jeweils optimale Anfahrgangstufe wird dabei direkt abhängig von der maximalen Belastbarkeit der Anfahr-Kupplung ermittelt. Die maximale Belastbarkeit der Anfahr-Kupplung wird in keinem Fall überschritten. Zur Anpassung an verschiedene Fahrzeug Varianten sind im wesentlichen Fahrzeugparameter wie das zum Anfahren zur Verfügung stehende Motormoment und Fahrwiderstandsbeiwerte zu ändern, welche üblicherweise bekannt sind.

Die maximal zulässigen Werte für die Rutschzeit und/oder die Reibarbeit werden vorteilhafterweise abhängig von der Fahrbahnsteigung, der Fahrzeugmasse und/oder dem Belastungszustand der Kupplung, welcher die Belastungshistorie der Kupplung berücksichtigt, in der elektronischen Steuerungseinrichtung - vorzugsweise in einem Kennfeldspeicher - abgelegt. Hierdurch wird eine hohe Sicherheit gegenüber Fehleinstellungen, welche zu Beschädigungen der Anfahr-Kupplung führen können, erzielt. Ebenso kann auch das zum Anfahren verfügbare Motormoment abhängig von der Fahrbahnsteigung und/oder der Fahrzeugmasse ermittelt werden; nicht in allen Situationen muß unter voller Motorlast angefahren werden.

Die Fahrzeugmasse kann vom Fahrer eingegeben oder auch mit Sensoren im Fahrwerk gemessen werden. Besonders vorteilhaft wird sie jedoch unter Verwendung von üblicherweise vorhandenen Raddrehzahlsensoren durch ein Verfahren ermittelt, bei welchem während zwei zeitlich versetzten Messungen innerhalb eines Meßzeitraums jeweils eine Zugkraft-Größe und eine daraus resultierende Bewegungs-Größe ermittelt wird.

Ein derartiges Verfahren ist beispielsweise aus der EP 0 666 435 A2 bekannt, welches zwei zeitlich versetzte Messungen der vom Antriebsmotor erzeugten Zugkraft und die daraus resultierende Beschleunigung umfaßt. Es wird davon ausgegangen, daß der unbekannte Fahrwiderstand bei zwei aufeinanderfolgenden Messungen im wesentlichen für beide Messungen gleich ist, so daß diese unbekannten Größen herausgekürzt werden können. Bei diesem bekannten Verfahren werden sowohl während einer Zugkraft-Phase als auch während einer zugkraftfreien Phase, während der eine Kupplung zum Zweck einer Gangschaltung eines Stufenwechselgetriebes geöffnet ist, jeweils ein Wert eines Raddrehmoments sowie ein Wert einer Fahrzeugbeschleunigung ermittelt, woraus die aktuelle Masse des Fahrzeugs berechenbar ist.

Als besonders vorteilhaft hat sich erwiesen, wenn in einer Weiterbildung des Verfahrens die erste der beiden Messungen einen ersten Datenerfassungszeitraum umfaßt, die zweite der beiden Messungen einen zweiten Datenerfassungszeitraum umfaßt, die Dauer der beiden Datenerfassungszeiträume größer ist als eine Mindestdauer, die Zugkraft-Größe dem zeitlichen Integral der während des jeweiligen Datenerfassungszeitraums wirkenden Zugkraft entspricht und die Bewegungsgröße der während des jeweiligen Datenerfassungszeitraums erfolgten Geschwindigkeitsänderung des Fahrzeugs entspricht. Wird dieses Verfahren zur Massenbestimmung zugrunde gelegt, kann die Anfahr-Gangstufe ermittelt werden, ohne daß hierfür ein zusätzlicher Sensor benötigt wird.

Dem Verfahren zur Massenbestimmung liegt die folgende Gleichung zugrunde:

$$M_{Fzg} = \frac{\int_{t_0}^{t_1} F_{Zug}\, dt \; - M_{Gang}\,(v_1 - v_0)}{(v_1 - v_0 - v_3 + v_2)}$$

Darin sind:

$M_{Fzg}$ die zu ermittelnde Fahrzeugmasse in kg,
$F_{zug}$ die Zugkraft bzw. das zum Rad gerechnete Motormoment in N,
$M_{gang}$ eine Korrekturgröße, die der Summe der Massenträgheitsmomente von Motor, Kupplung und Stufenwechselgetriebe, reduziert auf die translatorische Bewegung, des Fahrzeugs entspricht, in kg,
$t_0, t_1$ Anfangs- und Endzeitpunkt der Zugkraft-Phase,
$v_0, v_1$ die Geschwindigkeiten des Fahrzeugs zu Beginn und am Ende der Zugkraft-Phase in m/s,
$v_2, v_3$ die Geschwindigkeiten zu Beginn und am Ende der zugkraftfreien Phase in m/s.

An dieser Stelle wird auf die nicht vorveröffentlichte ältere Patentanmeldung DE 198 37 380.5 der Anmelderin verwiesen, welche ein Verfahren zur Massenermittlung zum Gegenstand hat. Deren Inhalt wird als zum Offenbarungsgehalt der vorliegenden Anmeldung gehörig erklärt.

In einer weiteren vorteilhaften Ausgestaltung des erfindungsgemäßen Verfahrens zur Ermittlung einer Anfahr-Gangstufe wird die fahrzustandsabhängige Größe, welche den Steigungswiderstand umfaßt, aus der Fahrzeugmasse, einer aktuellen Zugkraft und einer daraus resultierenden aktuellen Fahrzeugbeschleunigung ermittelt, während sich das Fahrzeug bewegt. Hierdurch wird gegenüber bekannten Verfahren ein Neigungssensor zur Bestimmung der Fahrbahnneigung eingespart.

Eine andere vorteilhafte Ausgestaltung des Verfahrens sieht vor, daß die fahrzustandsabhängige Größe neben dem Steigungswiderstand des Fahrzeugs außerdem den Rollwiderstand des Fahrzeugs umfaßt, der auch beim Anfahr-Vorgang wirkt. Hierdurch wird der tatsächliche Fahrwiderstand, der sich beim Anfahr-Vorgang hauptsächlich aus dem Steigungswiderstand und dem Rollwiderstand des Fahrzeugs zusammensetzt, besser nachgebildet. Der Luftwiderstand kann beim Anfahr-Vorgang vernachlässigt werden.

Aus den Größen Fahrzeugmasse MFzg, aktueller Zugkraft $F_{Zug}$ und der Fahrzeugbeschleunigung $a_{Fzg}$ kann der Fahrwiderstand, der gleich der Summe aus Roll- und Steigungswiderstand ist, durch Lösen der Bewegungsgleichung berechnet werden.

Das erfindungsgemäße Verfahren wird anhand der beiliegenden Zeichnungen näher erläutert. Es zeigen:

Fig. 1    ein Block-Schaubild des erfindungsgemäßen Verfahrens und

Fig. 2    ein Ablauf-Diagramm eines Teils des erfindungsgemäßen Verfahrens.

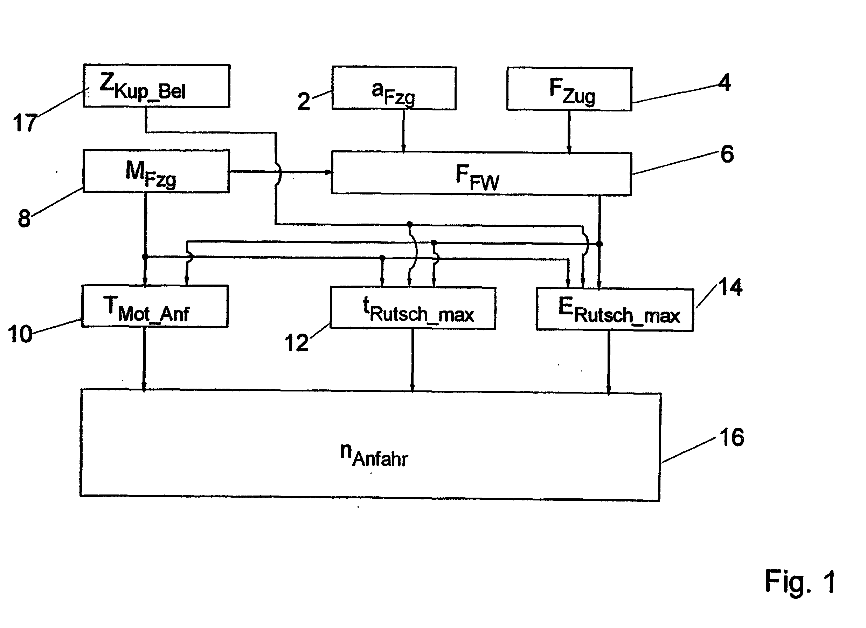

In Fig. 1 ist mit 6 der Block zur Berechnung des fahrzustandsabhängigen Fahrwiderstands aus Fahrzeugmasse 8, der an den Antriebsrädern wirkenden Zugkraft 4 und der daraus resultierenden Fahrzeugbeschleunigung 2 bezeichnet. Das zum Anfahren zur Verfügung stehende Motormoment 10, die während des Anfahr-Vorgangs maximal zulässige Rutschzeit der Anfahr-Kupplung 12 sowie die maximal zulässige Reibarbeit 14 werden, jeweils abhängig von der Fahrzeugmasse 8, dem aktuellen Fahrwiderstand 6 und einer den Belastungszustand der Kupplung beschreibenden Größe 17, ermittelt. Im Block 16 wird der Anfahr-Gang abhängig von diesen Größen 10, 12, 14 ermittelt.

Im einzelnen laufen in den Blöcken folgende Verfahrensschritte ab:

Die momentane Fahrzeugbeschleunigung $a_{Fzg}$ 2 entspricht der zeitlichen Ableitung der Fahrzeuggeschwindigkeit, welche vorzugsweise von Raddrehzahlsensoren aufgenommen wird.

Die auf die Antriebsräder des Fahrzeugs wirkende Zugkraft $F_{Zug}$ 4 wird ermittelt aus Motormoment und dem im jeweiligen Gang vorliegenden Übersetzungsverhältnis zwischen Motor und Antriebsrad, wobei auch Wirkungsgrade der einzelnen Komponenten des Triebstrangs berücksichtigt werden. Das Signal für das Motormoment wird vorzugsweise von der Motorsteuerung bereitgestellt oder kann alternativ aus der Stellung des Lastgebers, der Motordrehzahl und einem in der Steuerungseinrichtung abgelegten Motorkennfeld ermittelt werden.

Im Block 6 wird der Fahrwiderstand nach folgender Gleichung ermittelt,

$$F_{FW} = F_{Zug} - M_{Fzg} \, {}^*a_{Fzg}$$

in der

$F_{Zug}$     die Zugkraft,
$M_{Fzg}$     die Fahrzeugmasse und
$a_{Fzg}$     die Fahrzeugbeschleunigung

sind.

Andererseits ist der Fahrwiderstand bei Vernachlässigung des Luftwiderstands auch gleich der Summe aus Steigungs- und Rollwiderstand,

$$F_{FW} = F_{Steig} + F_{Roll} = M_{Fzg} \, {}^* \, g(\sin(\alpha) + k_{Roll_0} \cos(\alpha))$$

wobei

$g$     die Erdbeschleunigung,
$\alpha$     der Steigungswinkel und
$k_{Roll_0}$     der geschwindigkeitsunabhängige Rollwiderstandsbeiwert

sind.

Durch Gleichsetzen der beiden obigen Gleichungen läßt sich bei Bedarf auch der aktuelle Steigungswinkel α ermitteln.

Das zum Anfahren verfügbare Motormoment 10, die während des Anfahr-Vorgangs maximal zulässige Rutschzeit 12 sowie die maximal zulässige Reibarbeit 14 sind vorteilhafterweise in Kennfeldspeichern der elektronischen Steuerungseinrichtung, abhängig von der Fahrzeugmasse 8, dem Fahrwiderstand und dem Belastungszustand der Kupplung 17, abgelegt. Je größer Fahrzeugmasse und Fahrwiderstand sind, und je kleiner die bisherige Kupplungsbelastung ist, desto größer sind die Werte der in den Kennfeldern abgelegten Größen. Über die in den Kennfeldern abgelegten Größen läßt sich die Belastung der Anfahr-Kupplung direkt beeinflussen und sicher nach oben begrenzen.

Der Belastungszustand der Kupplung kann beispielsweise anhand von Temperaturen oder anhand einer seit der letzten Kupplungsbelastung verstrichenen Zeit beschrieben werden. Insbesondere ist eine rechnerische Größe zur Beschreibung des Belastungszustands geeignet, welche die über der Zeit an der Kupplung angefallene Reibleistung berücksichtigt, und die länger zurückliegende Reibleistungen weniger stark bewertet, als zeitlich nahe zurückliegende Reibleistungen.

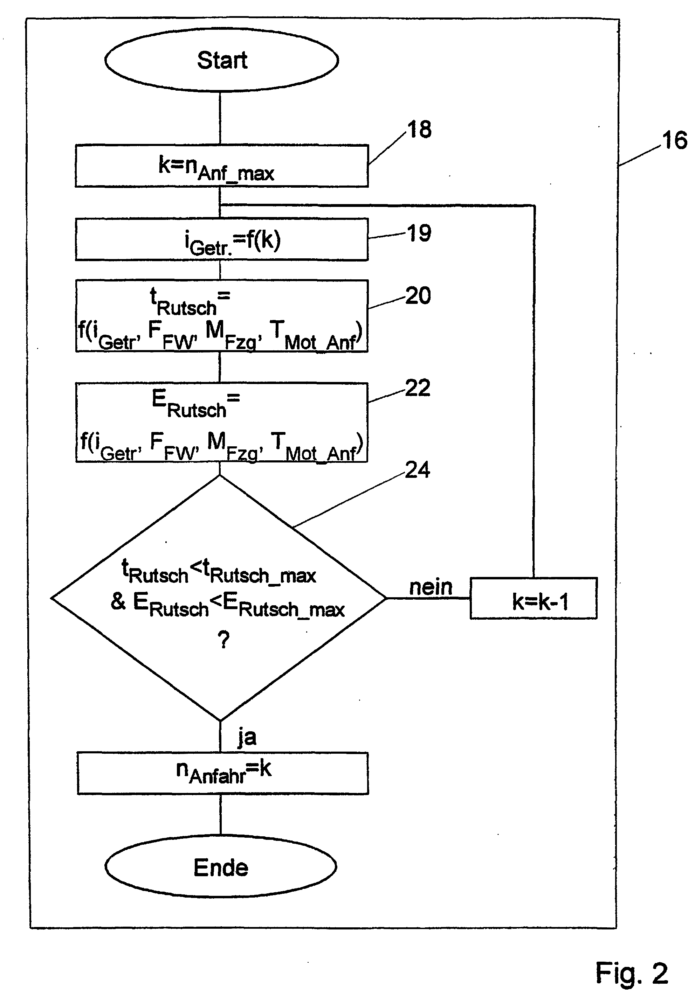

Der dem Block 16 zugrunde liegende Algorithmus zur Anfahr-Gangbestimmung wird anhand Fig. 2 erläutert. Die Zählvariable k wird im Block 18 zunächst gleich einem Wert gesetzt, der der höchsten zum Anfahren geeigneten Gangstufe entspricht. Im Block 19 wird die Getriebeübersetzung abhängig von der Gangstufe ermittelt. Die Getriebeübersetzungen der Gangstufen sind in der elektronischen Steuerungseinrichtung abgelegt. Abhängig von der Übersetzung der Gangstufe, der aktuellen Fahrzeugmasse, vom aktuellen Fahrwiderstand und von dem zur Verfügung stehenden Motormoment wird für diese Gangstufe jeweils ein voraussichtlicher Wert für die Rutschzeit 20 und die Reibarbeit 22 während des Anfahr-Vorgangs vorausberechnet. Im Block 24 werden diese vorausberechneten Werte mit den maximal zulässigen Werten 12, 14, die zuvor ermittelt wurden, verglichen. Sind die vorausberechneten Werte kleiner oder gleich den maximal zulässigen Werten, wird der aktuelle Wert der Zählvariable k als Anfahr-Gangstufe ausgegeben.

Wenn mindestens einer der vorausberechneten Werte größer ist als der zulässige Wert, wird die Berechnungsschleife mit der nächstkleineren, zum Anfahren geeigneten Gangstufe wiederholt.

Die Fahrwiderstandsberechnung wird, abgesehen von einigen Ausnahmefällen, auf die hier nicht näher eingegangen werden soll, während der Fahrt ständig, d. h. in kurzen Zeitabständen, durchgeführt, so daß dieses Verfahren immer bei Stillstand des Fahrzeugs eine geeignete Anfahr-Gangstufe bereitstellt.

Bezugszeichen

2    Fahrzeugbeschleunigung
4    Zugkraft
6    Fahrwiderstand
8    Fahrzeugmasse
10    zum Anfahren zur Verfügung stehendes Motormoment
12    während des Anfahr-Vorgangs maximal zulässige Rutschzeit
14    während des Anfahr-Vorgangs maximal zulässige Reibarbeit
16    Algorithmus zur Anfahr-Gangbestimmung
17    Block
18    Block
19    Block
20    voraussichtliche Rutschzeit
22    voraussichtliche Reibarbeit
24    Block

**Patentansprüche**

**1.** Verfahren zur Ermittlung einer Anfahr-Gangstufe für ein Fahrzeug mit einem Stufenwechselgetriebe mit mehreren Gangstufen, wobei das Stufenwechselgetriebe antriebsseitig durch eine wahlweise schließbare Anfahrkupplung mit einem ein Motormoment erzeugenden Antriebsmotor verbindbar ist, und abtriebsseitig trieblich mit Antriebsrädern des Fahrzeugs verbunden ist, welche eine Zugkraft übertragen, wobei die Anfahr-Gangsstufe von einer elektronischen Steuerungseinrichtung mindestens abhängig von der Fahrzeugmasse (8) und einer weiteren, fahrzustandsabhängigen Größe (6) ermittelt wird, welche den Steigungswiderstand des Fahrzeugs umfaßt, **dadurch**

**gekennzeichnet,**

- **daß** ein maximal zulässiger Wert für eine Rutschzeit (12) und/oder ein maximal zulässiger Wert für eine Reibarbeit (14) der Anfahrkupplung während des Anfahrvorgangs, sowie ein zum Anfahren verfügbares Motormoment (10) ermittelt wird,
- **daß**, beginnend mit einer höchsten zum Anfahren geeigneten Gangstufe (18) in einer Berechnungsschleife abhängig von der Übersetzung der Gangstufe (19), der Fahrzeugmasse (8), der fahrzustandsabhängigen Größe (6) und dem zum Anfahren verfügbaren Motormoment (10) Werte für die Rutschzeit (20) und/ oder die Reibarbeit (22) vorausberechnet werden,
- **daß** die vorausberechneten Werte (20, 22) mit den maximal zulässigen Werten (12, 14) verglichen werden,
- **daß** die Berechnungsschleife mit der nächstkleineren zum Anfahren geeigneten Gangstufe wiederholt wird, wenn mindestens einer der vorausberechneten Werte größer als die maximal zulässigen Werte sind
- und **daß** eine Gangstufe als Anfahr-Gangstufe ausgegeben wird, wenn die vorausberechneten Werte kleiner oder gleich den maximal zulässigen Werten sind.

2. Verfahren nach Anspruch 1, **dadurch gekennzeichnet, daß** die maximal zulässigen Werte für die Rutschzeit (12) und/oder die Reibarbeit (14) abhängig von der Fahrbahnsteigung (6), der Fahrzeugmasse (8) und/oder dem Belastungszustand der Kupplung (17) in der elektronischen Steuerungseinrichtung - vorzugsweise in einem Kennfeldspeicher - abgelegt sind.

3. Verfahren nach Anspruch 1 oder 2, **dadurch gekennzeichnet, daß** die Fahrzeugmasse (8) mit einem Verfahren ermittelt wird, welches mindestens zwei zeitlich versetzte Messungen innerhalb eines Meßzeitraums umfaßt, durch die jeweils mindestens eine, vom Antriebsmotor erzeugte, die auf die Antriebsräder des Fahrzeugs in Bewegungsrichtung einwirkende Zugkraft kennzeichnende Zugkraft-Größe und mindestens eine, die Bewegung des Fahrzeugs kennzeichnende Bewegungsgröße ermittelt wird, wobei eine der beiden Messungen während einer zugkraftfreien Phase erfolgt, während der die Anfahrkupplung zum Zweck einer Gangschaltung des Stufenwechselgetriebes geöffnet ist, und die andere der beiden Messungen während einer Zugkraft-Phase erfolgt, während der die Anfahrkupplung geschlossen ist und eine Zugkraft auf die Antriebsräder übertragen wird, und wobei mit den ermittelten Größen der beiden zeitlich versetzten Messungen die aktuelle Fahrzeugmasse berechnet wird.

4. Verfahren nach Anspruch 3, **dadurch gekennzeichnet, daß** die erste der beiden Messungen einen ersten Datenerfassungszeitraum umfaßt, die zweite der beiden Messungen einen zweiten Datenerfassungszeitraum umfaßt, die Dauer der beiden Datenerfassungszeiträume größer ist als eine Mindestdauer, die Zugkraft-Größe dem zeitlichen Integral der während des jeweiligen Datenerfassungszeitraums wirkenden Zugkraft entspricht, und die Bewegungsgröße der während des jeweiligen Datenerfassungszeitraums erfolgten Geschwindigkeitsänderung des Fahrzeugs entspricht.

5. Verfahren nach einem der Ansprüche 1 bis 4, **dadurch gekennzeichnet, daß** die weitere, fahrzustandsabhängige Größe aus der Fahrzeugmasse (8), einer aktuellen Zugkraft (4) und einer daraus resultierenden aktuellen Fahrzeugbeschleunigung (2) ermittelt wird, während sich das Fahrzeug bewegt.

6. Verfahren nach Anspruch 5, **dadurch gekennzeichnet, daß** die weitere fahrzustandsabhängige Größe (6) den Rollwiderstand des Fahrzeugs umfaßt.

**Claims**

1. Method for determining a starting gear step for a vehicle with a multi-step variable-speed transmission, whereby on its input end the variable-speed transmission can be connected to a prime mover generating engine torque through an optionally lockable starting clutch and on its output end it is propulsively connected to the vehicle's driving wheels transmitting traction. At the same time, an electronic control system determines the starting gear step based at least on the vehicle mass (8) and on another driving mode-related parameter (6) which includes the climbing resistance of the vehicle,
**characterized in that**

- a maximum allowable slip time value(12) and/or a maximum allowable friction (14) value of the starting clutch during the starting process as well as an engine torque (10) for starting are determined;
- beginning with a highest gear step (18) suitable for starting, values for the slip time (20) and /or the friction work (22) are predetermined by a calculation loop based on gear ratio(19), vehicle mass (8), the driving mode-related parameter (6) and the engine torque (10) available for starting;

- the predetermined values (20, 22) are compared with the maximum allowable values (12, 14);
- the calculation loop is repeated with the next-lowest gear step suitable for starting if at least one of the predetermined values exceeds the maximum allowable values;
- a gear step is issued as starting gear step if the predetermined values are smaller or equal to the maximum allowable values.

**2.** Method according to claim 1, **characterized**
**in that** the maximum allowable values for slip time (12) and/or friction work (14), which depend on road gradient (6), vehicle mass (8) and/or the load condition of the clutch (17), are stored in the electronic control system - preferably in a characteristics memory.

**3.** Method according to claim 1 or 2, **characterized**
**in that** the vehicle mass (8) is determined by a method comprising at least two time-staggered measurements within a measuring period, through which at least a mover-generated traction value acting on the vehicle's driving wheels in its direction of motion and at least a kinetic value of the vehicle is determined. One of the two measurements takes place during a traction-free phase, during which the starting clutch is open to enable a gearshift of the multi-step variable-speed transmission, and the other measurement takes place during a traction phase, during which the starting clutch is closed and traction is transmitted to the driving wheels. Based on the parameters determined by the two time-staggered measurements, the vehicle mass is calculated.

**4.** Method according to claim 3, **characterized**
**in that** the first of the two measurements covers a first data recording period and the second of the two measurements covers a second data recording period; the period of the two data recording periods exceeds a minimum period; the traction value corresponds to the temporal integral of the traction active during each data recording period; the kinetic value corresponds to the vehicle speed changes occurring during the respective data recording periods.

**5.** Method according to one of the claims 1 to 4, **characterized**
**in that** the additional, driving mode-dependent value is determined on the basis of the vehicle mass (8), a current traction value(4) and a resultant current vehicle acceleration value(2)while the vehicle is in motion.

**6.** Method according to claim 5, **characterized**
**in that** the further driving mode-dependent parameter (6) includes the rolling resistance of the vehicle.

**Revendications**

**1.** Procédé pour déterminer un étage de vitesse de démarrage pour un véhicule comprenant une transmission à changement d'étage qui comporte plusieurs étages de vitesse, la transmission à changement d'étage pouvant être reliée sur le côté d'entrée, par l'intermédiaire d'un embrayage de démarrage qui peut être embrayé sélectivement, à un moteur d'entraînement qui produit un couple moteur, tandis que, sur le côté sortie, elle est reliée cinématiquement à des roues motrices du véhicule qui transmettent une force de traction, l'étage de vitesse de démarrage étant déterminé par un dispositif de commande électronique, au moins en fonction de la masse (8) du véhicule et d'une autre grandeur (6) dépendant de l'état de marche, qui comprend la résistance de pente du véhicule, **caractérisé en ce que**

- on détermine une valeur maximale admissible pour un temps de patinage (12) et/ou une valeur maximale admissible pour un travail de friction (14) de l'embrayage de démarrage pendant le processus de démarrage, ainsi qu'un couple moteur (10) qui est disponible pour le démarrage,
- en commençant à un étage de vitesse (18) le plus élevé approprié pour le démarrage, on calcule préalablement des valeurs pour le temps de patinage (20) et/ou pour le travail de friction (22) dans une boucle de calcul, en fonction du rapport de transmission de l'étage de vitesse (19), de la masse (8) du véhicule, de la grandeur (6) dépendant de l'état de marche, et du couple moteur (10) disponible pour le démarrage,
- on compare les valeurs (20, 22) calculées préalablement aux valeurs maximales admissibles (12, 14),
- on répète la boucle de calcul avec l'étage de vitesse immédiatement inférieur, approprié pour le démarrage si au moins l'une des valeurs calculées préalablement est supérieure aux valeurs maximales admissibles,

- et on émet un étage de vitesse en tant qu'étage de vitesse de démarrage lorsque les valeurs calculées préalablement sont inférieures ou égales aux valeurs maximales admissibles.

2. Procédé selon la revendication 1, **caractérisé en ce que** les valeurs maximales admissibles pour le temps de patinage (12) et/ou pour le travail de friction (14) sont enregistrées dans le dispositif de commande électronique, de préférence dans une mémoire de diagrammes, en fonction de la pente de la chaussée (6), de la masse (8) du véhicule et/ou de l'état de charge de l'embrayage (17).

3. Procédé selon la revendication 1 ou 2, **caractérisé en ce que** la masse (8) du véhicule est déterminée par un procédé qui comprend au moins deux mesures décalées dans le temps à l'intérieur d'un espace de temps de mesure, par lesquelles on détermine au moins une grandeur de force de traction produite par le moteur d'entraînement, qui caractérise la force de traction agissant sur les roues motrices du véhicule dans le sens du mouvement, et au moins une quantité de mouvement qui caractérise le mouvement du véhicule, une des deux mesures s'effectuant pendant une phase exempte de force de traction, pendant laquelle l'embrayage de démarrage est débrayé pour l'exécution d'un changement de vitesse dans la transmission à changement d'étage, et l'autre des deux mesures s'effectuant pendant une phase de force de traction pendant laquelle l'embrayage de démarrage est embrayé et une force de traction est transmise aux roues motrices, et la masse actuelle du véhicule étant calculée au moyen des grandeurs des deux mesures décalées dans le temps qui ont été obtenues.

4. Procédé selon la revendication 3, **caractérisé en ce que** la première des deux mesures comprend une première période de saisie de données, la deuxième des deux mesures comprend une deuxième période de saisie des données, la durée des deux périodes de saisie des données est supérieure à une durée minimale, la grandeur de la force de traction correspond à l'intégrale dans le temps de la force de traction agissant pendant la période de saisie des données considérée et la quantité de mouvement correspond à la variation de vitesse du véhicule qui s'est produite pendant la période de saisie des données considérée.

5. Procédé selon l'une des revendications 1 à 4, **caractérisé en ce que** l'autre grandeur fonction de l'état de marche est déterminée à partir de la masse (8) du véhicule, d'une force de traction actuelle (4) et d'une accélération actuelle (2) du véhicule qui en résulte, pendant que le véhicule est en mouvement.

6. Procédé selon la revendication 5, **caractérisé en ce que** l'autre grandeur (6) fonction de l'état de marche comprend la résistance au roulement du véhicule.

Fig. 1

Start

18

$k = n_{Anf\_max}$

16

19

$i_{Getr.} = f(k)$

20

$t_{Rutsch} =$
$f(i_{Getr}, \; F_{FW}, \; M_{Fzg}, \; T_{Mot\_Anf})$

22

$E_{Rutsch} =$
$f(i_{Getr}, \; F_{FW}, \; M_{Fzg}, \; T_{Mot\_Anf})$

24

$t_{Rutsch} < t_{Rutsch\_max}$
$\& \; E_{Rutsch} < E_{Rutsch\_max}$
?

nein

$k = k-1$

ja

$n_{Anfahr} = k$

Ende

Fig. 2